# EUROPEAN PATENT APPLICATION

(11) **EP 3 512 269 A1**
(43) Date of publication of application: **17.07.2019**
(21) Application number: 18214318.0
(22) Date of filing: 20.12.2018
(51) Int. Cl.: H04W 60/00, H04W 88/06, H04W 88/16

(54) **HIERARCHICAL INDIRECT REGISTRATION FOR CONNECTING A USER EQUIPMENT TO A 5G NETWORK**

(30) Priority: 15.01.2018 US 201862617314 P
(71) Applicant: Industrial Technology Research Institute, 31040 Hsinchu (TW)
(72) Inventor: LAI, Chia-Lin, 701 Tainan City (TW); TAN, Tze-Jie, Hsinchu County (TW); TALAT, Samer T., 300 Hsinchu City (TW)
(74) Representative: Becker Kurig Straus

(57) **Abstract**

The disclosure proposes a hierarchical registration method and related apparatus. In an aspect, the method would include registering to the 5G communication network; establishing a connection with the UE after registering to the 5G communication network; receiving a service request message of the UE for registering to the 5G communication network after establishing the connection with the UE; transmitting a first user plane message which includes the service request message of the UE to the 5G communication network; receiving from the 5G communication network an authentication response message which corresponds to the service request message of the UE and forwarding the authentication response message to the UE; and transmitting to the 5G communication network a second user plane message which includes user data of the UE after the authentication response message indicates that the UE is authorized by the 5G communication network.

## Description

### TECHNICAL FIELD

The disclosure is directed to a hierarchical registration method for connecting a UE to a 5G communication system and related apparatuses using the same method.

### BACKGROUND

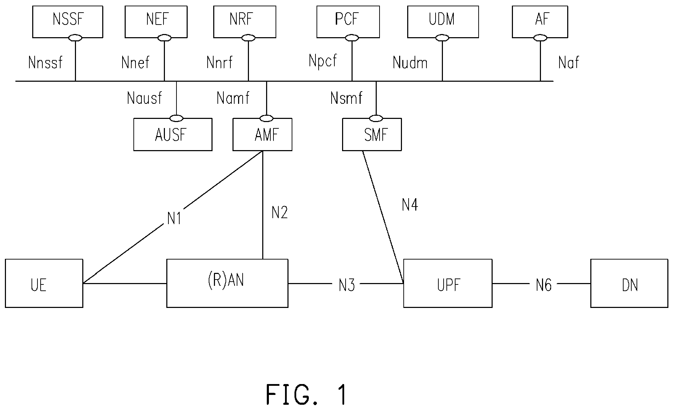

FIG. 1 shows an overview of an existing 5G communication network architecture which is currently well known and documented in 3GPP TS 23.501. It is worth noting that the terms used in this disclosure and concepts that correspond to the terms are consistent with 3GPP TS 23.501. The existing 5G communication network as shown in FIG. 1 is in many ways similar to LTE communication network, but there are also quite few differences. The core network control plane (CP) currently has been split into Access Management Functions (AMF) and Session Management Functions (SMF), and user plane (UP) is handled by the User Plane Function (UPF) node. The radio access network (RAN) utilizes the N2 interface for control plane and the N3 interface for user plane along with the N1 interface to connect a user equipment (UE) to a core network.

In addition to AMF and SMF which are previously described, the existing 5G communication network architecture of FIG. 1 may also contain various functions which include not limited to Authentication Server Function (AUSF), Data network (DN), e.g. operator services, Internet access or 3rd party services, Structured Data Storage network function (SDSF), Unstructured Data Storage network function (UDSF), Network Exposure Function (NEF), NF Repository Function (NRF), Policy Control function (PCF), Unified Data Management (UDM), User plane Function (UPF), Application Function (AF), etc.

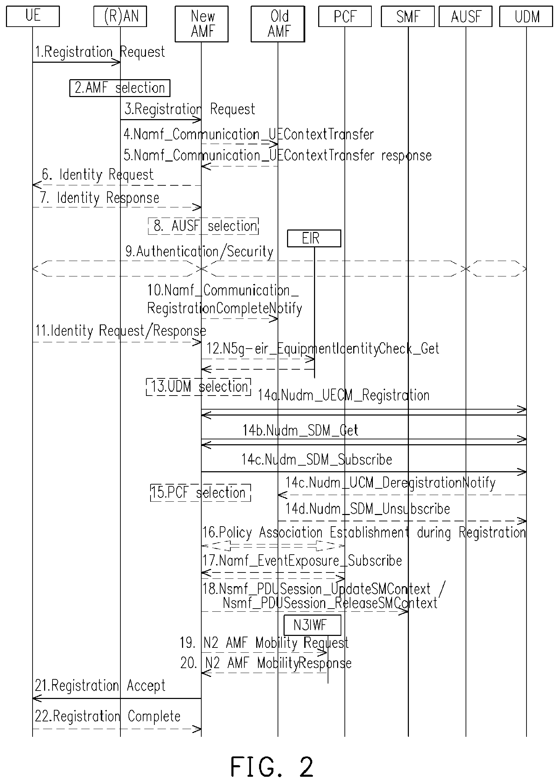

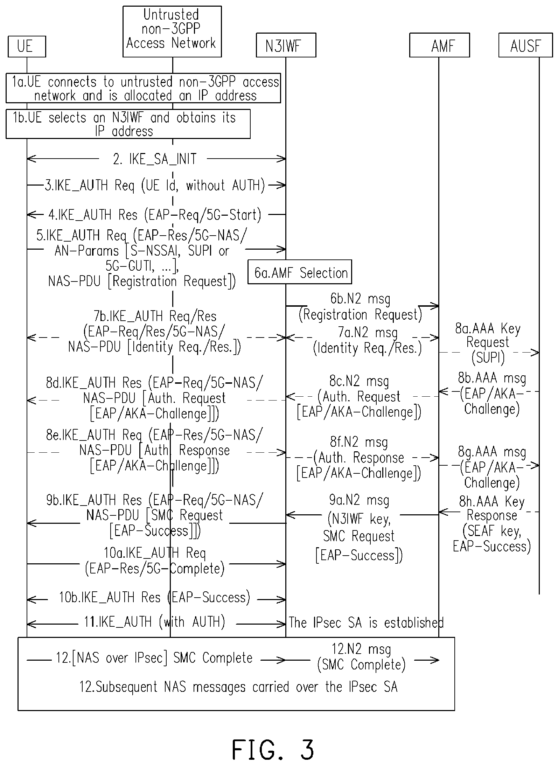

In order for a UE to connect to a 5G network, a UE would typically perform a registration procedure which has been defined in either FIG. 2 or FIG. 3 of the disclosure. Assuming that a UE is connected to a customer-premises equipment or residential gateway (CPE/RG), the UE may perform the registration procedure as shown in FIG. 3 to connect to a core network. The details of the registration procedure are currently well known and can be found in 3GPP TS 23.502 especially under "4.2.2 Registration Management procedures", and the details of FIG. 2 will not be repeated. For example, a UE would likely perform the registration procedure of FIG. 2 if the UE connects to a core network through a next generation radio access network (NG-RAN).

Otherwise, the UE may also perform the registration procedure as shown in FIG. 3 to connect to a core network through an untrusted non-mobile access network. Essentially, a UE would set a tunnel between the UE to a Non-3GPP Interworking Function (N3IWF) via an untrusted non-mobile access technology (e.g. WiFi), and the procedure has been described in TS 23.501 and 23.502 in more details. The tunnel between UE and N3IWF can be created by exchanging specific control messages generated by UE such as Subscription Concealed Identifier (SUCI) as defined in TS 23.501. After the UE has been assigned an IP address from untrusted non-mobile access type such as a WiFi access type, UE may undergo a process to find a proper N3IWF for a secure tunnel for the subsequent exchange of messages (e.g, Non Access Stratum (NAS) message). Furthermore, after finishing the selection of the N3IWF for the UE, the selected N3IWF would set up an N2 interface between the N3IWF and the AMF. The N2 interface between the N3IWF and the AMF would function nearly identically as the N2 interface between the (R)AN and AMF of FIG. 2. For example, a UE would likely perform the registration procedure of FIG. 3 if the UE connects to a core network through a Wi-Fi access point.

Based on the current registration procedure of FIG. 2 and FIG. 3 as previously described, a registration procedure of either FIG. 2 or FIG. 3 would be triggered by the UE directly to connect to a core network. However, a hierarchical level of access for UEs behind different access nodes which connect to a core network has not been known. It could be helpful to impose a hierarchical level of access for UEs behind different access nodes for connecting to a core network.

### SUMMARY OF THE DISCLOSURE

The disclosure is directed to a hierarchical registration method which connects a UE to a 5G network and related apparatuses using the same method.

In one of the exemplary embodiments, the disclosure is directed to a hierarchical registration method used by an electronic device for connecting a user equipment (UE) to a 5G communication network through a mobile access network or a non-mobile access network. The method would include not limited to registering to the 5G communication network; establishing a connection with the UE after registering to the 5G communication network; receiving a service request message of the UE for registering to the 5G communication network after establishing the connection with the UE; transmitting a first user plane message which includes the service request message of the UE to the 5G communication network; receiving from the 5G communication network an authentication response message which corresponds to the service request message of the UE and forwarding the authentication response message to the UE; and transmitting to the 5G communication network a second user plane message which includes user data of the UE after the authentication response message indicates that the UE is authorized by the 5G communication network.

In one of the exemplary embodiments, the disclosure is directed to an electronic device which would include not limited to: a wireless transceiver; and a processor connected to the transceiver. The processor is configured at least to: register to the 5G communication network via the wireless transceiver; establish, via the wireless transceiver, a connection with the UE after registering to the 5G communication network; receive, via the wireless transceiver, a service request message of the UE for registering to the 5G communication network after establishing the connection with the UE; transmit, via the wireless transceiver, a first user plane message which includes the service request message of the UE to the 5G communication network; receive, via the wireless transceiver, from the 5G communication network an authentication response message which corresponds to the registration request of the UE and forwarding the authentication response message to the UE; and transmit, via the wireless transceiver, to the 5G communication network a second user plane message which includes user data of the UE after the authentication response message indicates that the UE is authorized by the 5G communication network.

In one of the exemplary embodiments, the disclosure is directed to a hierarchical registration method used by a base station for connecting a user equipment (UE) to a 5G communication network, the method would include not limited to: receiving a registration message from an electronic device; receiving from the electronic device a first user plane message which includes a service request message of the UE for authenticating the UE to the 5G communication network after the electronic device has been authenticated by the 5G communication network; receiving from the 5G communication network an authentication response message which corresponds to the service request message of the UE and forwarding the authentication response message to the electronic device; receiving from the electronic device a second user plane message which includes user data of the UE after the authentication response message indicates that the UE is authorized by the 5G communication network; extracting the user data from the second user plane message and determining whether to establish an N2 connection and an N3 connection on behalf of the UE from the user data; and transmitting the user data to the 5G communication network.

In one of the exemplary embodiments, the disclosure is directed to a base station which includes not limited to: a wireless transceiver; and a processor connected to the transceiver and configured at least to: receive, via the wireless transceiver, a registration message from an electronic device; receive, from the electronic device via the wireless transceiver, a first user plane message which includes a service request message of the UE for authenticating the UE to the 5G communication network after the electronic device has been authenticated by the 5G communication network; receive, from the 5G communication network via the wireless transceiver, an authentication response message which corresponds to the service request message of the UE and forwarding the authentication response message to the electronic device; receive, via the wireless transceiver, from the electronic device a second user plane message which includes user data of the UE after the authentication response message indicates that the UE is authorized by the 5G communication network; extract the user data from the second user plane message and determining whether the UE has connected to the electronic device in agent mode or in normal mode; establish an N2 connection and an N3 connection in response to the UE having connected to the electronic device in agent mode; and transmit, via the wireless transceiver, the user data to the 5G communication network in response to the UE having connected to the electronic device in agent mode.

In order to make the aforementioned features and advantages of the disclosure comprehensible, exemplary embodiments accompanied with figures are described in detail below. It is to be understood that both the foregoing general description and the following detailed description are exemplary, and are intended to provide further explanation of the disclosure as claimed.

It should be understood, however, that this summary may not contain all of the aspect and embodiments of the disclosure and is therefore not meant to be limiting or restrictive in any manner. Also, the disclosure would include improvements and modifications which are obvious to one skilled in the art.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 illustrates a known 5G communication system architecture.
FIG. 2 illustrates a registration procedure for a UE to connect to a core network through a mobile access network.
FIG. 3 illustrates a registration procedure for a UE to connect to a core network through an untrusted non-mobile access network.
FIG. 4 illustrates a 5G communication system architecture which implements the proposed hierarchical registration method which connects a UE to the 5G communication system architecture via a mobile access network in accordance with one of the exemplary embodiments of the disclosure.
FIG. 5A illustrates the control plane of a registration procedure which allows a UE behind a CPE/RG to connect to a 5G communication system via a mobile access technology in normal mode in accordance with one of the exemplary embodiments of the disclosure.
FIG. 5B illustrates the user plane of a registration procedure which allows a UE behind a CPE/RG to connect to a 5G communication system via a mobile access network in normal mode in accordance with one of the exemplary embodiments of the disclosure.
FIG. 6A illustrates the control plane of a registration procedure which allows a UE behind a CPE/RG to connect to a 5G communication system via a non-mobile access technology in normal mode in accordance with one of the exemplary embodiments of the disclosure.
FIG. 6B illustrates the user plane of a registration procedure which allows a UE behind a CPE/RG to connect to a 5G communication system via a non-mobile access network in normal mode in accordance with one of the exemplary embodiments of the disclosure.
FIG. 7 illustrates a 5G communication system architecture which implements the proposed hierarchical registration method which connects a UE to the 5G communication system architecture via a non-mobile access network in accordance with one of the exemplary embodiments of the disclosure.
FIG. 8 illustrates a 5G communication system architecture which implements the proposed hierarchical registration method which connects a UE to the 5G communication system architecture without CPE/RG supporting N1 as a relay node via a mobile access network in accordance with one of the exemplary embodiments of the disclosure.
FIG. 9 illustrates a 5G communication system architecture which implements the proposed hierarchical registration method which connects a UE to the 5G communication system architecture without CPE/RG supporting N1 as a relay node via a non-mobile access network in accordance with one of the exemplary embodiments of the disclosure.
FIG. 10 illustrates a hierarchical registration method applicable to an electronic apparatus which connects a UE to a 5G network in accordance with one of the exemplary embodiments of the disclosure.
FIG. 11 illustrates the electronic apparatus of FIG. 10 in accordance with one of the exemplary embodiments of the disclosure.
FIG. 12 illustrates a hierarchical registration method applicable to a base station which connects a UE to a 5G network in accordance with one of the exemplary embodiments of the disclosure.
FIG. 13 illustrates the base station of FIG. 10 in accordance with one of the exemplary embodiments of the disclosure.
FIG. 14 illustrates the control plane of a registration procedure which allows a UE behind a CPE/RG to connect to a 5G communication system via a mobile access technology in agent mode in accordance with one of the exemplary embodiments of the disclosure.
FIG. 15 illustrates the user plane of a registration procedure which allows a UE behind a CPE/RG to connect to a 5G communication system via a mobile access network in agent mode in accordance with one of the exemplary embodiments of the disclosure.
FIG. 16 illustrates the control plane of a registration procedure which allows a UE behind a CPE/RG to connect to a 5G communication system via a non-mobile access technology in agent mode in accordance with one of the exemplary embodiments of the disclosure.
FIG. 17 illustrates the user plane of a registration procedure which allows a UE behind a CPE/RG to connect to a 5G communication system via a non-mobile access network in agent mode in accordance with one of the exemplary embodiments of the disclosure.

### DETAILED DESCRIPTION OF DISCLOSED EMBODIMENTS

Reference will now be made in detail to the present exemplary embodiments of the disclosure, examples of which are illustrated in the accompanying drawings. Wherever possible, the same reference numbers are used in the drawings and the description to refer to the same or like parts.

The disclosure proposes a hierarchical registration method and related apparatuses for connecting a UE to a 5G communication system. As previously described, currently a UE would utilize the registration procedures of either FIG. 2 or FIG. 3 to connect to a 5G communication system. The registration procedures are triggered by a UE to directly connect to a core network of the 5G communication system either through a mobile access network or a non-mobile access network. However, a hierarchical registration method under which a UE being behind an access node indirectly connect to a core network of a 5G communication system through the assistance of the access node has not been supported. The proposed hierarchical registration method and related apparatuses would enable UEs behind different access nodes to register to a 5G communication system and to communication with local network devices. The hardware of the UEs would need to be compatible with a 5G communication system, and the UE would need to have already subscribed to the 5G communication system. This disclosure would disclose the registration procedures and characteristics of related apparatus in further detail to allow UEs to register to a 5G communication system through both a mobile access network and a non-mobile access network in a hierarchical level access network architecture.

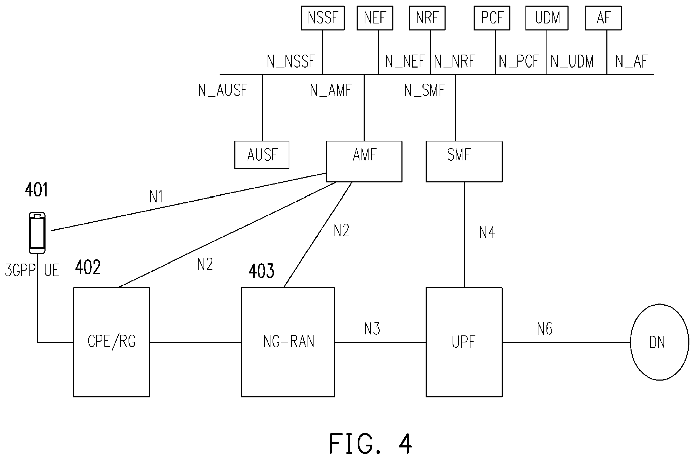

FIG. 4 shows hierarchical level access network architecture by which a UE may connect to a 5G communication system through a CPE or a RG which connects the UE to the 5G communication system through a NG-RAN or a non-mobile access Broadband wireline. The terms and functionalities of NG-RAN and the non-mobile access Broadband wireline is consistent with definitions supplied by 3GPP and Broadband Forum (BFF) respectively. Under the hierarchical level access network architecture of FIG. 4, a UE 401 is assumed to be able to support N1 signaling and is behind a CPE/RG 402 which may connect the UE 401 to a 5G core network through a NG-RAN / a Broadband wireline 403. The CPE/RG 402 could be a part of a mobile access network or a non-mobile access network.

For the scenario of a UE 401 connecting to a 5G core network through the CPE/RG 402 by using a mobile access network, various apparatuses would implement various functions which are described as follows. The CPE/RG 402 may broadcast its public identity which has been previously assigned by 5G network, and thus the UE 401 would know whether the CPE/RG 402 is in the same public land mobile network (PLMN) from the broadcasted message from the CPE/RG 402 and determine whether to connect to the CPE/RG 402 in agent mode or normal mode accordingly.

The NG-RAN 403 may determine whether an incoming data traffic from the UE 401 or the CPE/RG 402 is in agent mode or normal mode. The incoming data traffic received by the NG-RAN 403 may contain data from the CPE/RG 402 only, from the UE 401 only, or mixed between the CPE/RG 402 and the UE 401. If in normal mode, the NG-RAN 403 would treat the incoming data traffic normally by forwarding the incoming data traffic to the core network regardless of whose data the incoming data traffic includes. In other words, the NG-RAN 403 would treat the incoming data traffic as just a data stream without knowing the identity of the UE 401. Whereas in agent mode, the identity of the UE is to be known. If in agent mode, between the UE 401 and the NG-RAN 403, the NG-RAN 403 may extract the incoming data traffic and reconstruct them to a N2 and / or a N3 message for the UE 401 or the CPE/RG 402. The NG-RAN 403 may reconstruct incoming data traffic from multiple UEs to be sent to the 5G communication system through the N2 and N3 interface. The NG-RAN 403 would allow the 5G communication system to detect the existence of the UE 401 through the N2 interface.

For example, if the UE 401 only wants to access the internet, the UE 401 might not have to register with the core network and obtain internet packets by treating the CPE/RG 402 as an access point after completing a registration procedure of FIG. 3 with the CPE /RG 402. It is worth noting that the CPE/RG 402 could be thought of as a Wi-Fi like device but having a SIM card. On the other hand, if the UE 401 want to make a mobile phone call for example, the UE 401 would need to register to the 5G core network and make its identity known by the 5G core network. The NG-RAN 403 would then need to detect the existence of the UE 401 and treat the incoming data traffic in agent mode by establishing an independent N2 / N3 connection for the UE 401. The 5G core network would be able to detect the existence of the UE 401 behind the CPE/RG 402 by the existence of the N2 / N3 connection interface.

For the scenario of the UE 401 connecting to a 5G core network through the CPE/RG 402 by using a non-mobile access network, various apparatuses would implement various functions which are described as follows. The CPE/RG 402 may broadcast its public identity which was previously assigned by a 5G communication system. Upon receiving the broadcasted message from the CPE/RG 402, the UE 401 may know whether the CPE/RG 402 is in the same PLMN as the UE 401 and would determine whether to connect to the CPE/RG 402 in the agent mode or in the normal mode. The non-mobile access network may determine whether an incoming data traffic from the UE 401 or the CPE/RG 402 is in normal mode or agent mode. For example, a Wi-Fi access point could be a part of the non-mobile access network. If the non-mobile access network has determined that the incoming data traffic is in normal mode, the non-mobile access network may process the incoming data traffic normally. If the non-mobile access network has determined that the incoming data traffic is in agent mode, the non-mobile access network may extract the incoming data traffic and reconstruct the incoming data traffic into a N2 and/or N3 message for the UE 401 or CPE/RG 402. The NG-RAN 403 may reconstruct incoming data traffic from multiple UEs to be sent to the 5G communication system through the N2 and N3 interface. The NG-RAN 403 would allow the 5G communication system to detect the existence of the UE 401 through the N2 interface.

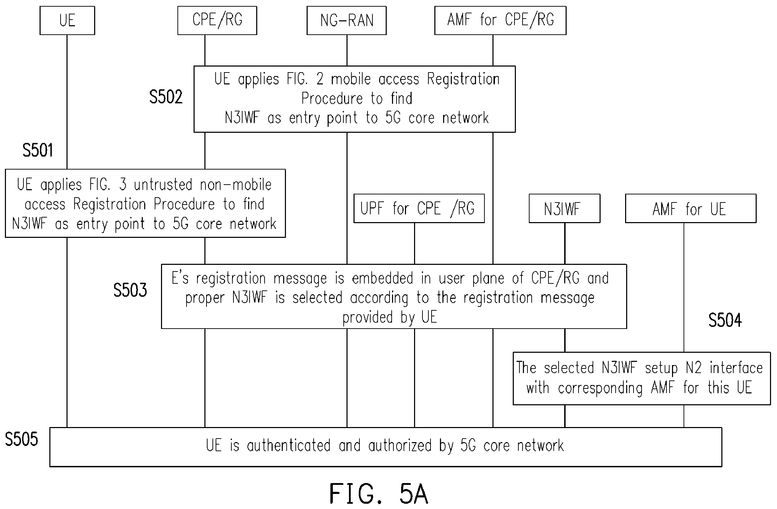

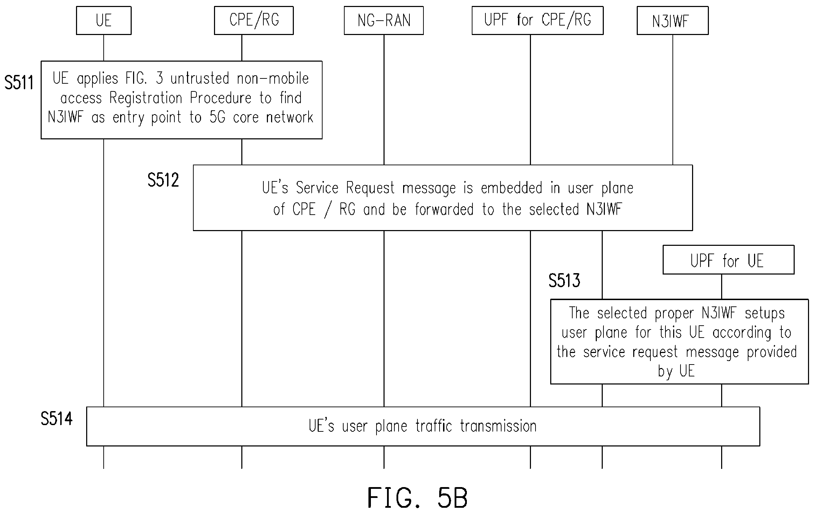

Procedures related to the above described functions implemented by the hierarchical level access network architecture of FIG. 4 are elaborated in further details. FIG. 5A and FIG. 5B respectively illustrate the control plane and the user plane of a registration procedure which allows a UE behind a CPE/RG to connect to a 5G communication system via a mobile access technology in normal mode. ACPE/RG which is capable of supporting the N1 interface would serve as a relay node through which a UE would be able to connect to a 5G communication system through either a mobile or a non-mobile access network. From the perspective of a 5G communication system, the CPE/RG could be considered as another UE having a SIM card. Therefore, the CPE/RG would need to apply either the mobile registration as described in FIG. 2 or the non-mobile registration procedures as described in FIG. 3 to register to the 5G communication system. Further, the CPE/RG may need to notify the 5G communication system about its relay capability since a UE may utilize the relay capability of the CPE/RG for connecting to the 5G communication system.

Referring to FIG. 4, a UE 401 may connect to a 5G communication system through one or more intermediate nodes such as one or more of the CPE/RG 402 and NG-RAN 403. One of the concepts is that a CPE/RG 402 may behave like a normal UE by connecting to a 5G communication system through the NG-RAN 403 and thus, the CPE/RG 402 may apply the registration procedure of FIG. 2 in order to connect itself or another UE (e.g. 401) to the 5G communication system. Any UE (e.g. 401) that is behind a CPE/RG (e.g. 402) normally cannot been detected by the NG-RAN (e.g. 403), but the UE (e.g. 401) would normally detect the CPE/RG (e.g. 402) as a network node such as an Access Point (AP) to the UE (e.g. 401) to obtain Internet access, and subsequently the UE (e.g. 401) may decide to camp on the CPE/RG (e.g. 402) through which the UE (e.g. 401) may connect to the 5G communication system. If a UE (e.g. 401) supports the N1 interface, and the UE (e.g. 401) could be authenticated and authorized by the 5G communication system by triggering the registration procedures of FIG. 2 or FIG. 3 to register to the 5G communication system. Since a UE (e.g. 401) may consider a CPE/RG (e.g. 402) as an untrusted non-mobile access network, the UE (e.g. 401) may use the registration procedure as shown in FIG. 3 which is further described in TS 23.501 and 23.502 to trigger the registration procedure. Subsequently, the registration procedure would establish a secure tunnel with a selected N3IWF to establish a non-mobile access.

By adhering to the above described principle, the control plane of the registration procedure of FIG. 5A is implemented as follows. In step S501, the CPE/RG may apply a mobile access Registration Procedure of FIG. 2 to find a N3IWF which serves as an entry point to a 5G core network. In step S502, a UE may attach to the CPE/RG and subsequently apply the untrusted non-mobile access Registration Procedure of FIG. 3 to find N3IWF as the entry point to the 5G core network. In step S503, the CPE/RG may forward the UE's registration message by embedding the registration message in the user plane of the CPE/RG, and the proper N3IWF is selected according to the registration message provided by the UE. In step S504, the selected N3IWF would set up the N2 interface with corresponding AMF for this UE. In step S505, the UE is authenticated and authorized by the 5G core network.

FIG. 5B illustrates the user plane of a registration procedure which allows a UE behind a CPE/RG to connect to a 5G communication system via a mobile access network. In step S511, a UE attaches to a CPE/RG and applies, through the CPE/RG, an untrusted non-mobile access Registration Procedure of FIG. 3 to find a N3IWF as an entry point to a 5G core network. In step S512, the CPE/RG would forward the UE's Service Request message which is embedded in the user plane of the CPE/RG to the selected N3IWF. In step S513, the selected N3IWF would setup the user plane for this UE according to the service request message provided by the UE. In step S514, the UE would transmit user data in the user plane.

For the registration procedures described in FIG. 5A and 5B, the UEs' control and user plane traffic are hidden since they are embedded within the CPE/RG's user plane traffic, and therefore, neither the NG-RAN nor the 5G network can detect UEs directly due to the CPE/RG's data traffic. Before the existence of a UE can be known, the 5G core network would need to process the data traffic transmitted by the CPE/RG and subsequently detect the existence of the UE behind the CPE/RG. Therefore, the following mechanism can be applied for the 5G core network to detect the existence of the UE behind the CPE/RG.

The CPE/RG may broadcast to one or more UEs its public identity (e.g., 5G-GUTI, PLMN ID) which assigned by the 5G network. When the UE receiving the public identity message and attaches to the CPE/RG, the UE may connect to the 5G network through the relay capability provided by this CPE/RG. After processing CPE/RG's 5G-GUTI, the UE would know whether the current CPE/RG is in the same PLMN as the UE. If the CPE/RG and the UE have the same PLMN or the CPE/RG's PLMN is in UE's PLMN list, UE may decide to connect to the CPE/RG in agent mode. If the CPE/RG does not have the same PLMN or is not in the UE's PLMN list, the UE may connect to the CPE/RG in normal mode. The 5G core network would detect the existence of UEs behind CPE/RG because the N2 interface set up by NG-RAN.

Once the UE has been registered to and authenticated by the 5G core network, the UE's public identity (e.g., 5G-GUTI) would be recorded by CPE/RG for mobility management. For example, the public identity (e.g., 5G-GUTI) could be transferred to another CPE/RG if the UE is to be handed over to another CPE/RG.

According to those above disclosure, the mechanism would be able to reduce the delay time and effort to extract the tunnel information from the data traffic of CPE/RG.

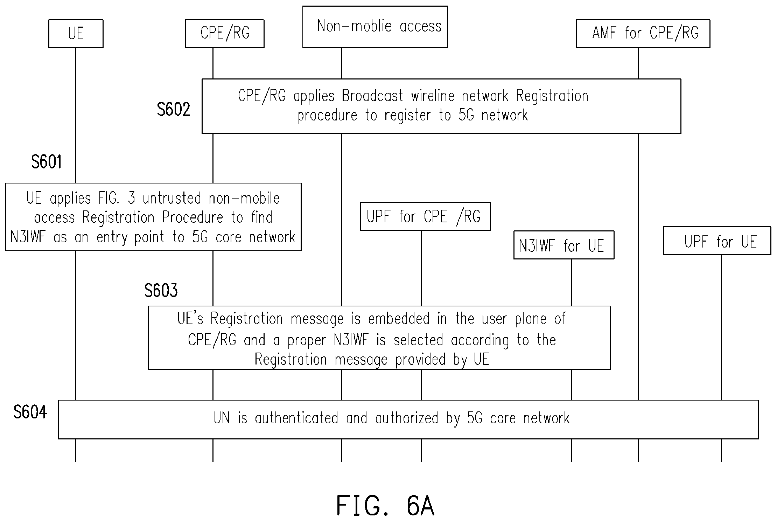

FIG. 6A illustrates the control plane of a registration procedure which allows a UE behind a CPE/RG to connect to a 5G communication system via a non-mobile access technology in normal mode in accordance with one of the exemplary embodiments of the disclosure. In step S602, the CPE/RG would apply a Broadcast wireline network Registration procedure to register to a 5G core network. In step S601, the UE would apply the untrusted non-mobile access Registration Procedure of FIG. 3 in order to attach and camp on the CPE/RG. Next, the UE would apply an access Registration Procedure to find a proper N3IWF as an entry point to 5G core network. In step S603, the UE's Registration message would be embedded in the user plane of CPE/RG, and a proper N3IWF could be selected according to the Registration message provided by UE. In step S604, the UE is assumed to be authenticated and authorized by 5G core network.

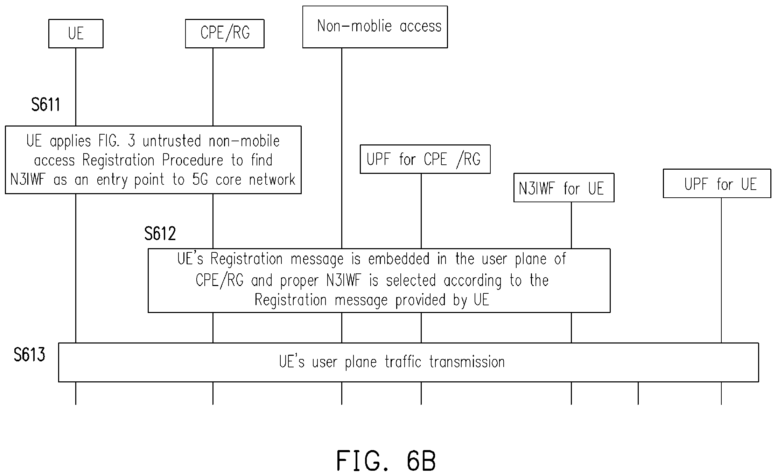

FIG. 6B illustrates the user plane of a registration procedure which allows a UE behind a CPE/RG to connect to a 5G communication system via a non-mobile access network in normal mode in accordance with one of the exemplary embodiments of the disclosure. In step S611, the UE would apply the untrusted non-mobile access Registration Procedure of FIG. 3 to attach and camp on the CPE/RG. Next, the UE would apply an access Registration Procedure to find a proper N3IWF as an entry point to 5G core network. In step S612, the UE's Registration message would be embedded in the user plane of CPE/RG and a proper N3IWF could be selected according to the Registration message provided by UE. In step S613, assuming that the authenticated and authorized by 5G core network, the UE would utilize its user plane for traffic transmission.

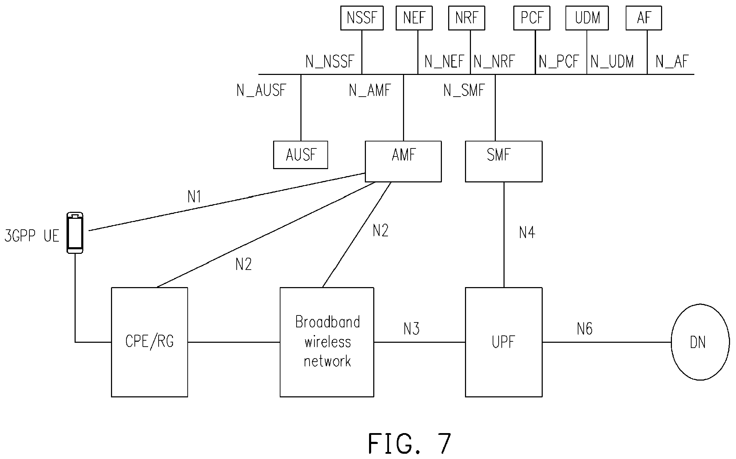

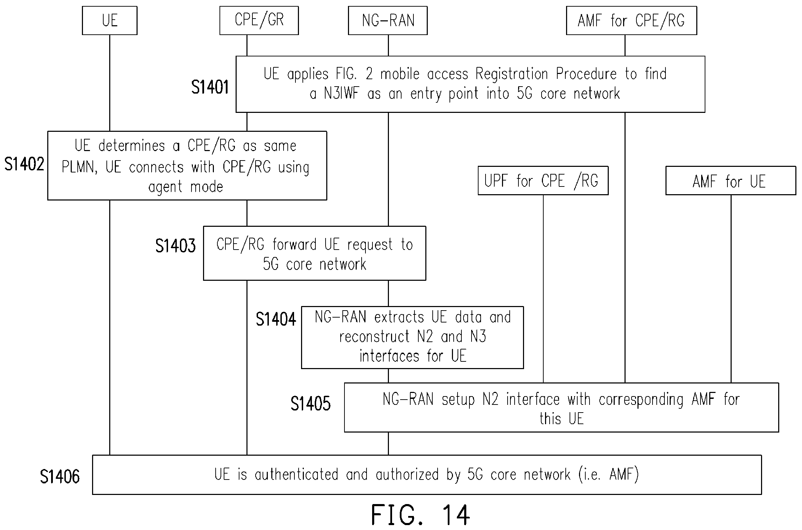

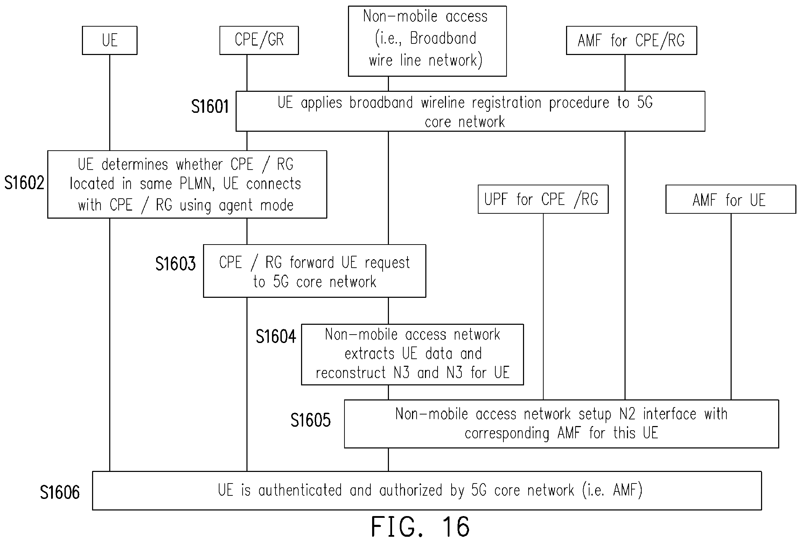

For non-mobile access, the FIG. 7 illustrates a modified 5G communication system architecture which implements the proposed hierarchical registration method for non-mobile access. The CPE/RG would broadcast to one or more UEs its public identity (e.g., 5G-GUTI, PLMN ID) assigned by 5G network. When a UE camps on the CPE/RG and receives the public identity message (e.g., 5G-GUTI), the UE may connect to the 5G network via the relay function of this CPE/RG. Upon receiving the CPE/RG's 5G-GUTI, the UE would determine whether the current CPE/RG is in the same PLMN or not. If the CPE/RG and the UE are in the same PLMN or the CPE/RG is in the UE's PLMN list, UE may determine whether to connect to the CPE/RG in agent mode or normal mode. In agent mode, the non-mobile access network (e.g. Wi-Fi) would setup the N2 / N3 connection on behalf of the UE. Assuming that the UE has completed the registration procedure of FIG. 14 and 16 successfully to the 5G core network through the non-mobile access network (e.g. Wi-Fi), in agent mode, the non-mobile network (e.g. Wi-Fi) the 5G network would be able to detect the existence of UEs behind CPE/RG through the non-mobile network because the N2 interface has been set up by non-mobile access network. Once the UE is registered to 5G network, the UE's public identity (e.g., 5G-GUTI) would be recorded in the CPE/RG for mobility management purposes.

FIG. 14 illustrates the control plane of a registration procedure which allows a UE behind a CPE/RG to connect to a 5G communication system via a mobile access technology in agent mode in accordance with one of the exemplary embodiments of the disclosure. In step S1401, a UE may apply the mobile access Registration Procedure of FIG. 2 to find a N3IWF as an entry point into a 5G core network. In step S1402, the UE would determine whether a CPE/RG is located in the same PLMN. If the UE has determined that the CPE/ RG is located in the same PLMN, the UE would connect with the CPE/RG in agent mode. In step S1403, the CPE/RG would forward the connect request of the UE to the 5G core network, and the request could be embedded in a user plane transmission. In step S1404, the NG-RAN would extract UE data from the user plane transmission and reconstruct N2 and N3 interfaces for UE. In step S1405, the RG-RAN S1405 NG-RAN would setup the N2 interface with a corresponding AMF for this UE. In step S1406, the UE is authenticated and authorized by the 5G core network.

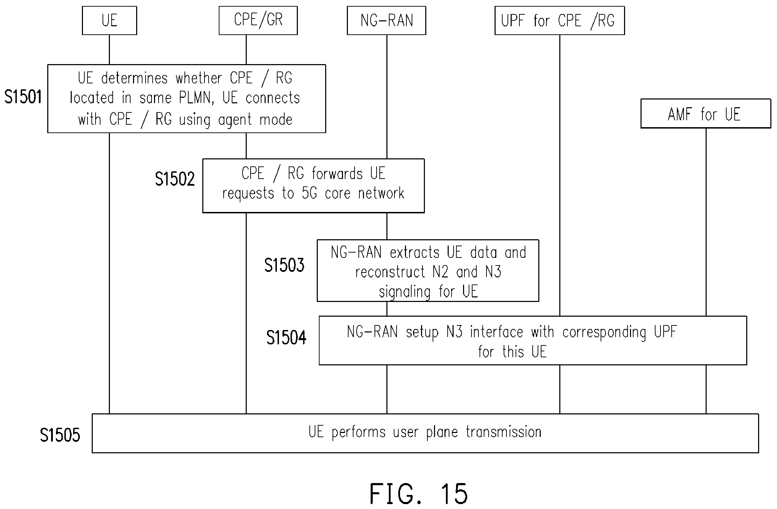

FIG. 15 illustrates the user plane of a registration procedure which allows a UE behind a CPE/RG to connect to a 5G communication system via a mobile access network in agent mode in accordance with one of the exemplary embodiments of the disclosure. In step S1501, the UE would determine whether the CPE/RG is located in the same PLMN as the UE. If so, then the UE may connect with the CPE/RG in agent mode. In step S1502, CPE/RG forwards UE's connection request to 5G core network. The connection request could be embedded in a user plane transmission. In step S1503, NG-RAN may extract UE data from the user plane transmission and reconstruct N2 and N3 interfaces for the UE. In step S1504, the NG-RAN would setup the N3 interface with the corresponding UPF for this UE. In step S1505, the UE would perform user plane transmission.

FIG. 16 illustrates the control plane of a registration procedure which allows a UE behind a CPE/RG to connect to a 5G communication system via a non-mobile access technology in agent mode in accordance with one of the exemplary embodiments of the disclosure. In steps S1601, the UE may apply a broadband wireline registration procedure to a 5G core network. In step S1602, the may UE determine whether the CPE/RG is located in same PLMN. If so, the UE may connect with the CPE/RG in agent mode. In step S1603, the CPE/RG may forward the UE's connection request to the 5G core network. The UE's connection request could be embedded in user plane transmission. In step S1604, the Non-mobile access network may extract UE's data from the user plane transmission and reconstruct N2 and N3 interfaces for the UE. In step S1605, the non-mobile access network may setup N2 interface with corresponding AMF for this UE. In step S1606, the UE could be authenticated and authorized by 5G core network (i.e. AMF).

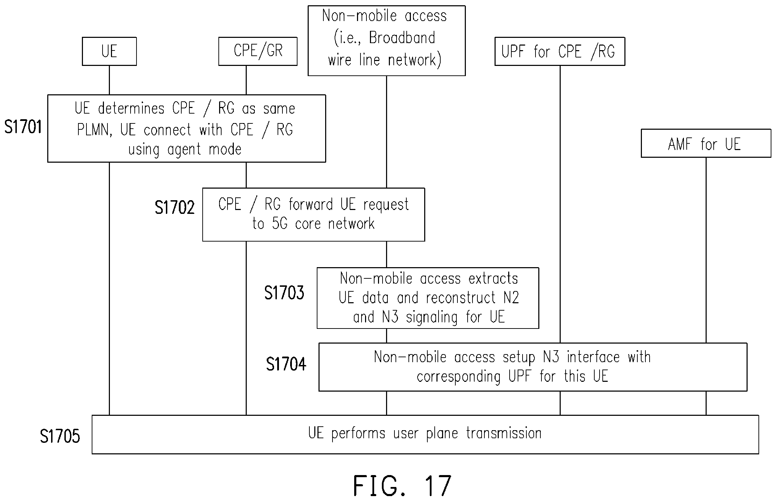

FIG. 17 illustrates the user plane of a registration procedure which allows a UE behind a CPE/RG to connect to a 5G communication system via a non-mobile access network in agent mode in accordance with one of the exemplary embodiments of the disclosure. In step S1701, the UE would UE determine whether the CPE/RG is located in the same PLMN as the UE. If so, UE may connect with the CPE/RG in agent mode. In step S1702, the CPE/RG may forward the UE's connection request to the 5G core network. The UE's connection request could be embedded in user plane transmission. In step S1703, Non-mobile access extracts UE's data from the user plane transmission and reconstruct N2 and N3 interfaces for UE. In step S1704, the Non-mobile access network would setup the N3 interface with corresponding UPF for this UE. In step S1705, the UE would perform user plane transmission.

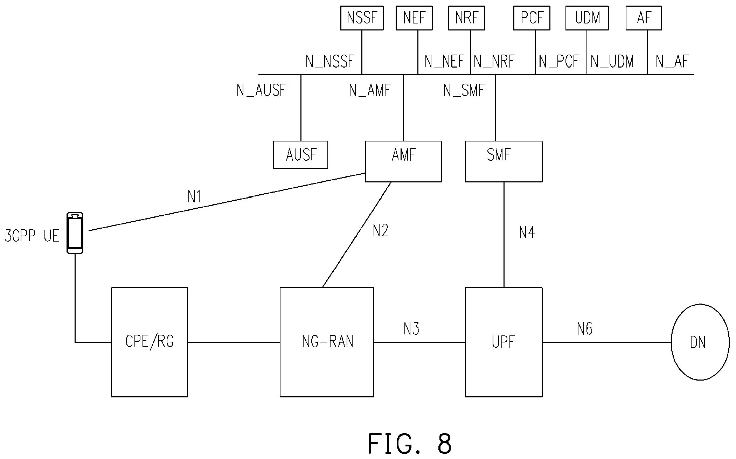

FIG. 8 illustrates a 5G communication system architecture which implements the proposed hierarchical registration method which connects a UE to the 5G communication system architecture without CPE/RG supporting N1 as a relay node via a mobile access network. For this scenario, the UE may connect to the 5G core network via the mobile access network, and the CPE/RG would function as a repeater. The CPE/RG would thus function as a transparent node between the UE and the NG-RAN. The CPE/RG, as a repeater, may broadcast or transmit / receive information from the NG-RAN information to the UE and thus function as an intermediary. The access network used between UE and mobile-access network can be any non-layer 3 technologies such as Bluetooth, Zigbee, etc.

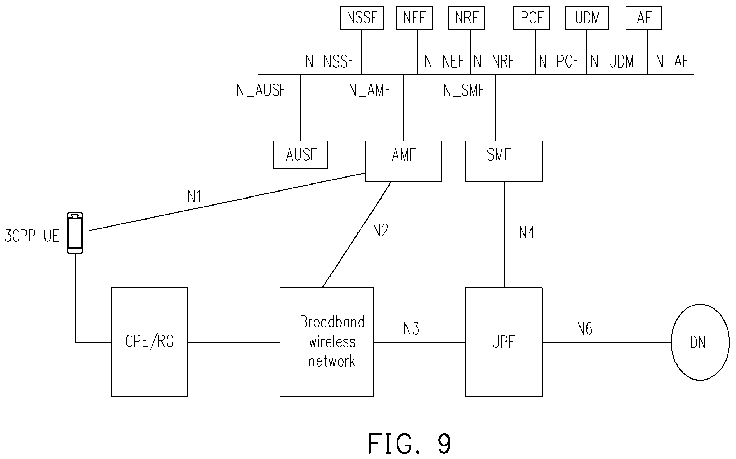

FIG. 9 illustrates a 5G communication system architecture which implements the proposed hierarchical registration method which connects a UE to the 5G communication system architecture without CPE/RG supporting N1 as a relay node via a non-mobile access network. For this scenario, the UE may connect to a 5G core network via the CPE/RG by using a non-mobile access network. The CPE/RG may function as a transparent node or a repeater between the UE and a Broadband wireline network. Therefore, the messages between the UE and the NG-RAN would be relayed by the CPE/RG which functions as an intermediary node. Similarly, the access network used between UE and mobile-access network can be any non-layer 3 technologies such as Bluetooth, Zigbee, etc.

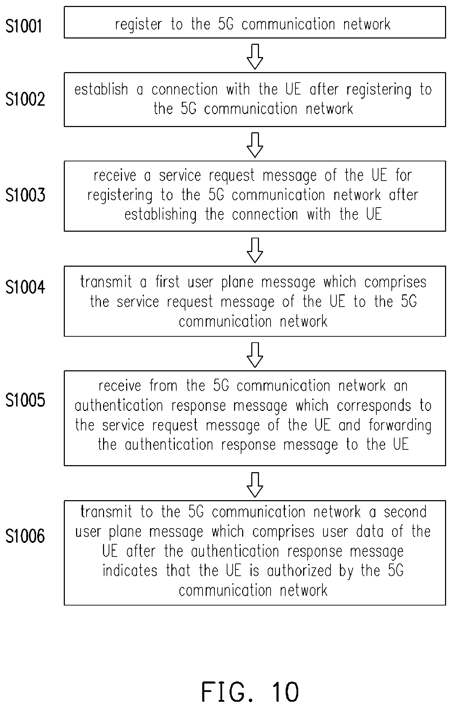

FIG. 10 illustrates a hierarchical registration method from the perspective of an electronic apparatus which connects a UE to a 5G communication network. It is assumed that the UE is behind the electronic device which could be a CPE/RG, and the CPE/RG attempts to connect the UE to the 5G communication network. In step S1001, the electronic device would register to the 5G communication network. In step S1002, the electronic device would establish a connection with the UE after registering to the 5G communication network. In step S1003, the electronic device would receive a service request message of the UE for registering to the 5G communication network after establishing the connection with the UE. In step S1004, the electronic device would transmit a first user plane message which includes the service request message of the UE to the 5G communication network. In step S1005, the electronic device would receive from the 5G communication network an authentication response message which corresponds to the service request message of the UE, and the electronic device would forward the authentication response message to the UE. In step S1006, the electronic device would transmit to the 5G communication network a second user plane message which includes user data of the UE after the authentication response message indicates that the UE is authorized by the 5G communication network. The user data of the UE and the electronic device may both embedded in the same second user plane message which is transmitted to the 5G communication network.

The step of establishing the connection with the UE may include broadcasting a public network identity (ID) of the electronic device and establishing the connection with the UE after broadcasting the public network ID of the electronic device. The public network ID of the electronic device could be assigned by an access management function (AMF) of the 5G communication network to indicate a location of the electronic device.

The step of registering to the 5G communication network may include transmitting registration messages through a control plane of the mobile access network which interfaces with the 5G communication network. The step of transmitting the first user plane message which has the service request message of the UE may include transmitting the first user plane message which includes the service request message of the UE to a non-3GPP interworking function (N3IWF) which has been selected by the UE. The mobile access network may include a next generation radio access network (NG-RAN).

Alternatively, the step of registering to the 5G communication network may include transmitting registration messages through a control plane to of the non-mobile access network which interfaces with the 5G communication network. The control plane of the non-mobile access network could be a broadband wireline network.

The step of transmitting the first user plane message which contains the service request message of the UE may include forwarding, by the non-mobile access network, the service request message of the UE to a non-3GPP interworking function (N3IWF) which has been selected by the UE.

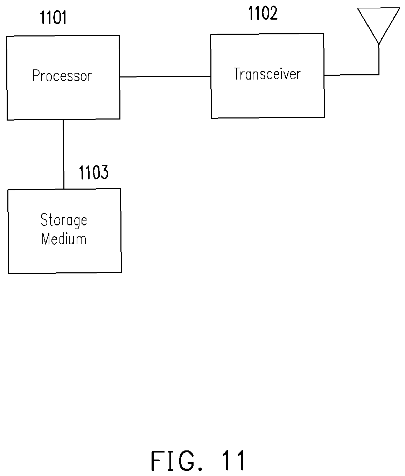

FIG. 11 illustrates the electronic apparatus of FIG. 10 in accordance with one of the exemplary embodiments of the disclosure. The electronic device could be a CPE/RG or any other types of UE having a SIM card. The electronic device could be also be a base station or any communication apparatus in the radio access network or the core network. The electronic device may include not limited to a hardware processor 1101, a hardware transceiver 1102, and a non-transitory storage medium 1103. The hardware processor 1101 are electrically connected to the hardware transceiver 1102 and the non-transitory storage medium 1203 and configured at least for implementing the method of hierarchical registration method used by an electronic device as well as its exemplary embodiments and alternative variations, and the method may include not limited to registering to the 5G communication network; establishing a connection with the UE after registering to the 5G communication network; receiving a service request message of the UE for registering to the 5G communication network after establishing the connection with the UE; transmitting a first user plane message which includes the service request message of the UE to the 5G communication network; receiving from the 5G communication network an authentication response message which corresponds to the service request message of the UE and forwarding the authentication response message to the UE; and transmitting to the 5G communication network a second user plane message which includes user data of the UE after the authentication response message indicates that the UE is authorized by the 5G communication network.

The hardware transceiver 1102 may include one or more transmitters and receivers configured to transmit and receive signals respectively in the radio frequency or in the mmWave frequency. The hardware transceiver 1102 may also perform operations such as low noise amplifying, impedance matching, frequency mixing, up or down frequency conversion, filtering, amplifying, and so forth. The hardware transceiver 1102 may each include one or more analog-to-digital (A/D) and digital-to-analog (D/A) converters which are configured to convert from an analog signal format to a digital signal format during uplink signal processing and from a digital signal format to an analog signal format during downlink signal processing. The hardware transceiver 1102 may further include an antenna array which may include one or multiple antennas to transmit and receive omni-directional antenna beams or directional antenna beams.

The hardware processor 1101 is configured to process digital signals and to perform procedures of the proposed hierarchical registration method in accordance with the proposed exemplary embodiments of the disclosure. Also, the hardware processor 1101 may access to the non-transitory storage medium 1103 which stores programming codes, codebook configurations, buffered data, and record configurations assigned by the hardware processor 1101. The hardware processor 1101 could be implemented by using programmable units such as a micro-processor, a micro-controller, a DSP chips, FPGA, etc. The functions of the hardware processor 1101 may also be implemented with separate electronic devices or ICs. It should be noted that the functions of hardware processor 1101 may be implemented with either hardware or software.

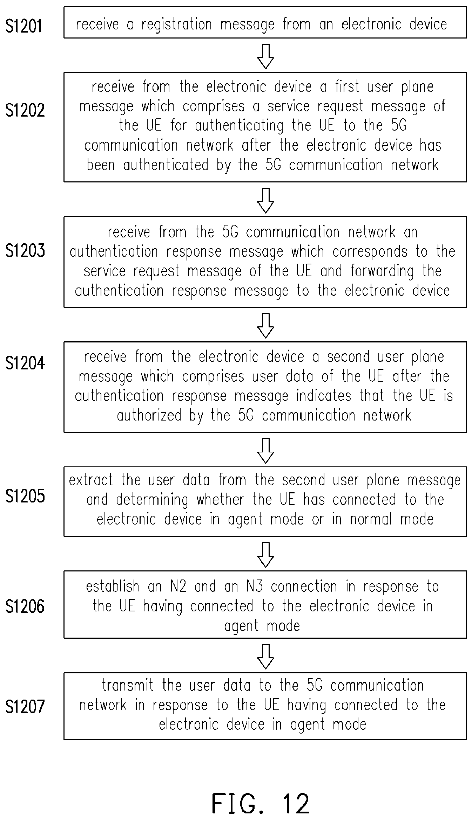

FIG. 12 illustrates a hierarchical registration method applicable to a base station which connects a UE to a 5G network in accordance with one of the exemplary embodiments of the disclosure. In step S1201, the base station would receive a registration message from an electronic device. In step S1202, the base station would receive from the electronic device a first user plane message which comprises a service request message of the UE for authenticating the UE to the 5G communication network after the electronic device has been authenticated by the 5G communication network. In step S1203, the base station would receive from the 5G communication network an authentication response message which corresponds to the service request message of the UE, and the base station would forward the authentication response message to the electronic device. In step S1204, the base station would receive from the electronic device a second user plane message which contains user data of the UE after the authentication response message indicates that the UE is authorized by the 5G communication network. In step S1205, the base station would extract the user data from the second user plane message and determining whether to establish an N2 connection and an N3 connection on behalf of the UE from the user data. In step S1206, the base station would transmit the user data to the 5G communication network. The above described user data may include a user data of the electronic device combines with a user data of the user equipment. The above described electronic device could be a CPE/RG, and the above described base station could be a gNB of a NG-RAN.

The step of the base station extracting the user data from the second user plane message and determining whether to establish an N2 connection and an N3 connection on behalf of the UE from the user data may include the base station determines whether the user equipment is establishing an independent connection to the 5G network, and the base station may establish the N2 connection and the N3 connection on behalf of the UE in response to the UE establishing the independent connection to the 5G network. Alternatively, the step of the base station extracting the user data from the second user plane message and determining whether to establish an N2 connection and an N3 connection on behalf of the UE from the user data may include the base station determines whether the user equipment is establishing an independent connection to the 5G network, and the base station forwards the user data to the 5G network without establishing the N2 connection and the N3 connection in response to the user equipment not establishing the independent connection to the 5G network.

The base station may establish another set of a N2 and N3 connection in response to the user data having a user data of an additional UE. Multiple sets of N2 / N3 connections could be establishes for multiple UEs, and each N2 / N3 connection could be used by a core network to identify a UE.

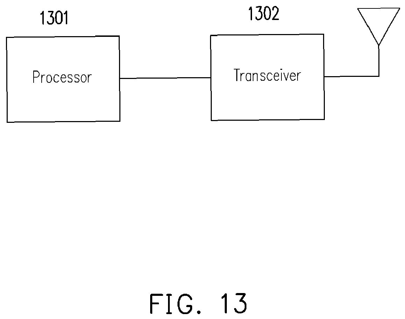

FIG. 13 illustrates the base station of FIG. 12 in accordance with one of the exemplary embodiments of the disclosure. The base station may include not limited to a hardware processor 1301 and a hardware transceiver 1302. The hardware processor 1301 is electrically connected to the hardware transceiver 1302 and configured at least for implementing the hierarchical registration method applicable to a base station as well as its exemplary embodiments and alternative variations, and the method may include not limited to receiving a registration message from an electronic device; receiving from the electronic device a first user plane message which includes a service request message of the UE for authenticating the UE to the 5G communication network after the electronic device has been authenticated by the 5G communication network; receiving from the 5G communication network an authentication response message which corresponds to the service request message of the UE and forwarding the authentication response message to the electronic device; receiving from the electronic device a second user plane message which includes user data of the UE after the authentication response message indicates that the UE is authorized by the 5G communication network; extracting the user data from the second user plane message and determining whether to establish an N2 connection and an N3 connection on behalf of the UE from the user data; and transmitting the user data to the 5G communication network.

The hardware transceiver 1302 may include one or more transmitters and receivers configured to transmit and receive signals respectively in the radio frequency or in the mmWave frequency. The hardware transceiver 1302 may also perform operations such as low noise amplifying, impedance matching, frequency mixing, up or down frequency conversion, filtering, amplifying, and so forth. The hardware transceiver 1302 may each include one or more analog-to-digital (A/D) and digital-to-analog (D/A) converters which are configured to convert from an analog signal format to a digital signal format during uplink signal processing and from a digital signal format to an analog signal format during downlink signal processing. The hardware transceiver 1302 may further include an antenna array which may include one or multiple antennas to transmit and receive omni-directional antenna beams or directional antenna beams.

The hardware processor 1301 is configured to process digital signals and to perform procedures of the proposed hierarchical registration method in accordance with the proposed exemplary embodiments of the disclosure. The hardware processor 1301 could be implemented by using programmable units such as a micro-processor, a micro-controller, a DSP chips, FPGA, etc. The functions of the hardware processor 1301 may also be implemented with separate electronic devices or ICs. It should be noted that the functions of hardware processor 1301 may be implemented with either hardware or software.

In view of the aforementioned descriptions, the present disclosure is suitable for being used in a 5G wireless communication system and is able to allow UEs to register to a 5G communication system through both a mobile access network and a non-mobile access network in a hierarchical level access network architecture so that UEs would be visible to a 5G communication system which would serve the UEs by meeting their QoS requirements.

No element, act, or instruction used in the detailed description of disclosed embodiments of the present application should be construed as absolutely critical or essential to the present disclosure unless explicitly described as such. Also, as used herein, each of the indefinite articles "a" and "an" could include more than one item. If only one item is intended, the terms "a single" or similar languages would be used. Furthermore, the terms "any of' followed by a listing of a plurality of items and/or a plurality of categories of items, as used herein, are intended to include "any of', "any combination of', "any multiple of', and/or "any combination of multiples of the items and/or the categories of items, individually or in conjunction with other items and/or other categories of items. Further, as used herein, the term "set" is intended to include any number of items, including zero. Further, as used herein, the term "number" is intended to include any number, including zero.

## Claims

1. A hierarchical registration method used by an electronic device for connecting a user equipment (UE) to a 5G communication network through a mobile access network or a non-mobile access network, the method comprising:
registering to the 5G communication network (S1001);
establishing a connection with the UE after registering to the 5G communication network (S1002);
receiving a service request message of the UE for registering to the 5G communication network after establishing the connection with the UE (S1003);
transmitting a first user plane message which comprises the service request message of the UE to the 5G communication network (S1004);
receiving from the 5G communication network an authentication response message which corresponds to the service request message of the UE and forwarding the authentication response message to the UE (S1005); and
transmitting to the 5G communication network a second user plane message which comprises user data of the UE after the authentication response message indicates that the UE is authorized by the 5G communication network (S1006).

2. The method of claim 1, wherein establishing the connection with the UE comprising:
broadcasting a public network identity (ID) of the electronic device; and
establishing the connection with the UE after broadcasting the public network ID of the electronic device, wherein the public network ID of the electronic device is assigned by an access management function (AMF) of the 5G communication network to indicate a location of the electronic device.

3. The method of claim 1, wherein registering to the 5G communication network comprising:
transmitting registration messages (S503) through a control plane of the mobile access network which interfaces with the 5G communication network.

4. The method of claim 3, wherein transmitting the first user plane message which comprises the service request message of the UE comprising:
transmitting the first user plane message which comprises the service request message of the UE to a non-3GPP interworking function (N3IWF) which has been selected by the UE.

5. The method of claim 3, wherein the control plane of the mobile access network comprises a next generation radio access network (NG-RAN).

6. The method of claim 1, wherein registering to the 5G communication network comprising:
transmitting registration messages through a control plane to of the non-mobile access network which interfaces with the 5G communication network.

7. The method of claim 6, wherein control plane of the non-mobile access network comprises a broadband wireline network.

8. The method of claim 6, transmitting the first user plane message which comprises the service request message of the UE comprising
forwarding, by the non-mobile access network, the service request message of the UE to a non-3GPP interworking function (N3IWF) which has been selected by the UE

9. The method of claim 1, wherein the electronic device is a customer-premises equipment (CPE) or residential gateway (RG).

10. The method of claim 8, wherein the CPE or RG is a mobile device and has a subscriber identification module (SIM) card through which the electronic device is subscribed to the 5G communication network.

11. The method of claim 1, wherein establishing the connection with the UE further comprising:
receiving and recording an ID of the UE; and
transmitting the ID of the UE to another electronic device during a handover procedure.

12. An electronic device comprising:
a wireless transceiver (1102); and
a processor (1101) connected to the transceiver and configured at least to:
register to the 5G communication network via the wireless transceiver;
establish, via the wireless transceiver, a connection with the UE after registering to the 5G communication network;
receive, via the wireless transceiver, a service request message of the UE for registering to the 5G communication network after establishing the connection with the UE;
transmit, via the wireless transceiver, a first user plane message which comprises the service request message of the UE to the 5G communication network;
receive, via the wireless transceiver, from the 5G communication network an authentication response message which corresponds to the registration request of the UE and forwarding the authentication response message to the UE; and
transmit, via the wireless transceiver, to the 5G communication network a second user plane message which comprises user data of the UE after the authentication response message indicates that the UE is authorized by the 5G communication network.

13. A hierarchical registration method used by a base station for connecting a user equipment (UE) to a 5G communication network, the method comprising:
receiving a registration message from an electronic device (S1201);
receiving from the electronic device a first user plane message which comprises a service request message of the UE for authenticating the UE to the 5G communication network after the electronic device has been authenticated by the 5G communication network (S1202);
receiving from the 5G communication network an authentication response message which corresponds to the service request message of the UE and forwarding the authentication response message to the electronic device (S1203);
receiving from the electronic device a second user plane message which comprises user data of the UE after the authentication response message indicates that the UE is authorized by the 5G communication network (S1204);
extracting the user data from the second user plane message and determining whether to establish an N2 connection and an N3 connection on behalf of the UE from the user data (S1205); and
transmitting the user data to the 5G communication network (S1207).

14. The method of claim 13, wherein the user data comprising a user data of the electronic device and a user data of the user equipment.

15. The method of claim 14, wherein extracting the user data from the second user plane message and determining whether to establish an N2 connection and an N3 connection on behalf of the UE from the user data comprising:
determining whether the user equipment is establishing an independent connection to the 5G network; and
establishing the N2 connection and the N3 connection on behalf of the UE in response to the UE establishing the independent connection to the 5G network.

16. The method of claim 14, wherein extracting the user data from the second user plane message and determining whether to establish an N2 connection and an N3 connection on behalf of the UE from the user data comprising:
determining whether the user equipment is establishing an independent connection to the 5G network; and
forwarding the user data to the 5G network without establishing the N2 connection and the N3 connection in response to the user equipment not establishing the independent connection to the 5G network.

17. The method of claim 15 further comprising:
establishing another set of a N2 and N3 connection in response to the user data having a user data of an additional UE.

18. The method of claim 13, wherein the electronic device is a customer-premises equipment (CPE) or residential gateway (RG).

19. The method of claim 11, wherein the base station is a gNB of a next generation radio access network (NG-RAN).

20. A base station comprising:
a wireless transceiver; and
a processor connected to the transceiver and configured at least to:
receive, via the wireless transceiver, a registration message from an electronic device (S1201);
receive, from the electronic device via the wireless transceiver, a first user plane message which comprises a service request message of the UE for authenticating the UE to the 5G communication network after the electronic device has been authenticated by the 5G communication network (S1202);
receive, from the 5G communication network via the wireless transceiver, an authentication response message which corresponds to the service request message of the UE and forwarding the authentication response message to the electronic device (S1203);
receive, via the wireless transceiver, from the electronic device a second user plane message which comprises user data of the UE after the authentication response message indicates that the UE is authorized by the 5G communication network (S1204);
extract the user data from the second user plane message and determining whether the UE has connected to the electronic device in an agent mode (S1205);
establish an N2 connection and an N3 connection in response to the UE having connected to the electronic device in the agent mode (S1206); and
transmit, via the wireless transceiver, the user data to the 5G communication network in response to the UE having connected to the electronic device in the agent mode (S1207).
